# EUROPÄISCHE PATENTANMELDUNG

(11) **EP 1 279 531 A2**
(43) Veröffentlichungstag der Anmeldung: **29.01.2003**
(21) Anmeldenummer: 02014963.9
(22) Anmeldetag: 09.07.2002
(51) Int. Cl.: B60H 1/24

(54) **Luftausströmer**

(30) Priorität: 26.07.2001 DE 10136376
(71) Anmelder: TRW Automotive Electronics & Components GmbH & Co. KG, 67677 Enkenbach/Alsenborn (DE)
(72) Erfinder: Stiehl, Udo, 67691 Hochspeyer (DE)
(74) Vertreter: Sties, Jochen, Dipl.-Ing.

(57) **Zusammenfassung**

Die Erfindung betrifft einen Luftausströmer (10) mit einem Rahmen (12) und mindestens einer Rückschlagklappe (14) Am Rahmen des Luftausströmers ist eine Antenne (62) angebracht. Der Luftausströmer ist insbesondere zur Entlüftung des Innenraumes eines Fahrzeuges geeignet.

## Beschreibung

Die Erfindung betrifft einen Luftausströmer, insbesondere zur Entlüftung des Innenraumes eines Fahrzeuges, mit einem Rahmen und mindestens einer Rückschlagklappe.

Heutzutage sind in Fahrzeugen diverse Sende- und Empfangsanlagen vorgesehen, beispielsweise für Mobilfunk, Notrufsysteme oder Navigationssysteme. Diese Sende- und Empfangsanlagen benötigen in der Regel getrennte Antennen, für die jeweils ein geeigneter Standort im Fahrzeug vorhanden sein muß.

Aufgabe der Erfindung ist es, eine Antenne in einem Fahrzeug so unterzubringen, daß sie gute Sende- und Empfangseigenschaften aufweist und einfach angebracht werden kann.

Zu diesem Zweck ist bei einem Luftausströmer der eingangs genannten Art am Rahmen eine Antenne angebracht. Damit kann die Antenne von der Fahrzeugkarosserie beabstandet sein, wodurch sich gute Sende- und Empfangseigenschaften für die Antenne ergeben. Die Antenne kann bereits vor der Befestigung im Fahrzeug am Luftausströmer angebracht sein, so daß die Montage einfacher und kostengünstiger ist.

Weitere vorteilhafte Ausführungsformen ergeben sich aus den Unteransprüchen.

Die Erfindung wird nachfolgend anhand einer vorteilhaften Ausführungsform ausführlich beschrieben. Dabei wird Bezug genommen auf die beigefügten Zeichnungen, in denen zeigt:
- Figur 1 eine perspektivische Ansicht eines erfindungsgemäßen Luftausströmers;
- Figur 2 eine perspektivische Ansicht des Rahmens des Luft ausströmers aus Figur 1;
- Figur 3 eine vergrößerte Ansicht des Bereichs III aus Figur 2;
- Figur 4 eine vergrößerte Ansicht des Bereichs IV aus Figur 2;
- Figur 5 eine vergrößerte Ansicht des Bereichs V aus Figur 2; und
- Figur 6 eine vergrößerte Ansicht des Bereichs VI aus Figur 2.

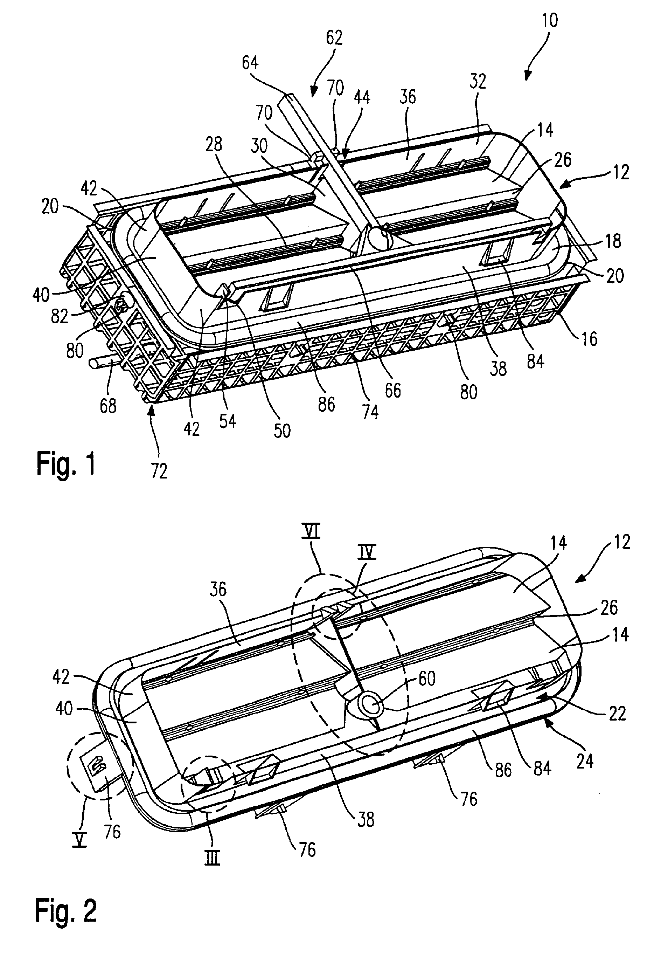

In Figur 1 ist ein Luftausströmer 10 zu sehen, der aus einem Rahmen 12 mit Rückschlagklappen 14 und einem Reflektor 16 besteht. Der Rahmen 12 wird von einer rechteckigen Grundplatte 18 mit abgerundeten Ecken 20 gebildet, die eine Oberseite 22 und eine Unterseite 24 aufweist. In der Grundplatte 18 ist eine Durchströmöffnung 26 ausgebildet, (Figur 2) welche durch die Rückschlagklappen 14 verschlossen werden kann. Das Funktionsprinzip des Luftausströmers 10 ist aus dem Stand der Technik bekannt, so daß hier nicht weiter darauf eingegangen werden muß.

Die Durchströmöffnung 26 ist zur Stabilisierung von einem Längssteg 28 und einem Quersteg 30 überspannt, welche zusammen über der Durchströmöffnung 26 ein rechtwinkeliges Kreuz bilden. Auf der Oberseite 22 der Grundplatte 18 erstreckt sich senkrecht zur Ebene der Grundplatte 18 eine Anschlußwand 32, mit einer zur Durchströmöffnung 26 weisenden Innenseite, welche die Durchströmöffnung 26 an ihrem Rand umschließt und bei der Montage in einem Fahrzeug der Führung des Luftausströmers 10, beispielsweise in einer Öffnung im Fahrzeugaufbau, dient. Die Anschlußwand 32 gliedert sich in einen ersten Längswandabschnitt 36, der an eine Längsseite der Durchströmöffnung 26 grenzt, einen zweiten Längswandabschnitt 38, parallel zum ersten Längswandabschnitt 36, und zwei kurze gerade Querwandabschnitte 40, welche die Längswandabschnitte 36 und 38 entlang der Schmalseiten der Durchströmöffnung 26 über Bogenwandabschnitte 42 verbinden.

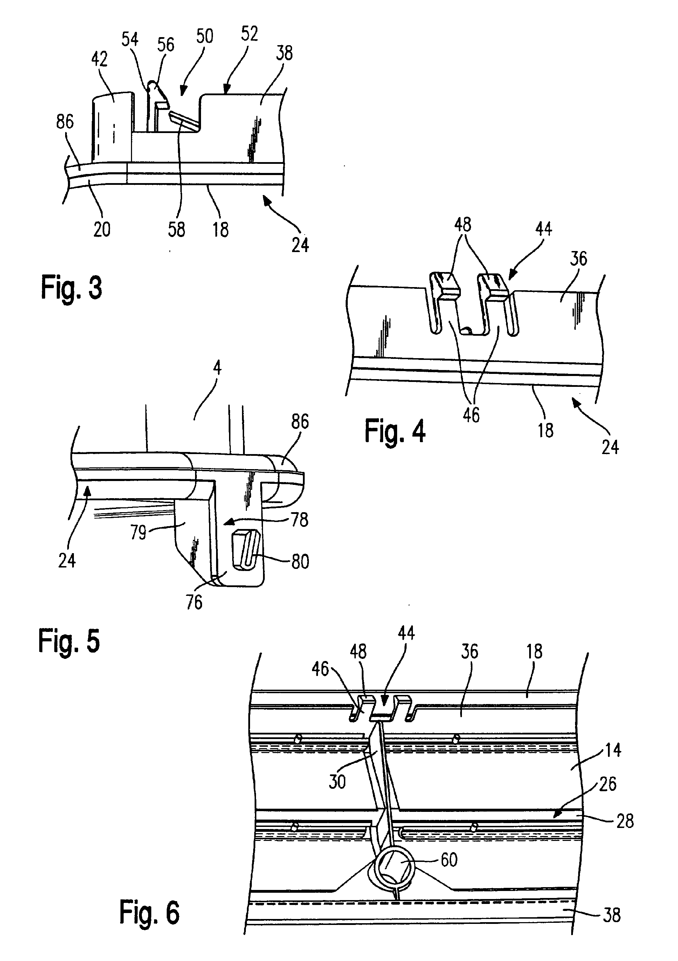

Im ersten Längswandabschnitt 36 ist in der Mitte eine Aussparung 44 vorgesehen (Figur 4), in welche sich zwei parallele, voneinander beabstandete Rastlaschen 46 erstrecken. Die Rastlaschen 46 ragen über den der Grundplatte 18 fernen Rand des ersten Längswandabschnittes 36 hinaus und sind an ihrem Ende jeweils mit einem keilförmigen Haken 48 versehen.

An den Enden des zweiten Längswandabschnittes 38 der Anschlußwand 32, angrenzend an die Bogenwandabschnitte 42, befindet sich jeweils eine Aussparung 50 (Figur 3). An der Innenseite 52 des zweiten Längswandabschnittes 38, im Bereich zwischen der Aussparung 50 und dem Rand der Durchströmöffnung 26, befindet sich jeweils eine Schnapplasche 54, die in den von der Aussparung 50 definierten Bereich auf der Innenseite 52 des zweiten Längswandabschnittes 38 ragt. An ihrem freien Ende ist jede der Schnapplaschen 54 wiederum mit einem keilförmigen Haken 56 versehen (Figur 3). Weiterhin erstreckt sich von der Innenseite 52 des zweiten Längswandabschnittes 38 zu jeder der Schnapplaschen 54 hin ein elastischer Federsteg 58, der jeweils vom Rand der Aussparung 50 mit seinem freien Ende zum Haken 56 weist.

Die Innenflächen des ersten Längswandabschnittes 36 und des zweiten Längswandabschnittes 38 sind in Höhe der Aussparung 44 durch den Quersteg 30 verbunden, wobei der Quersteg 30 sich benachbart zum zweiten Längswandabschnitt 38 zu einer Aufnahmeöffnung 60 erweitert (Figur 6). Die Aufnahmeöffnung 60 hat die Form einer kreiszylindrischen Röhre und führt zur Unterseite 24 der Grundplatte 18.

Eine T-förmige Antenne 62, die einen Mittelbalken 64 und einen Querbalken 66 aufiveist, ist an dem Rahmen 12 angebracht. An der Verbindungstelle zwischen Mittelbalken 64 und Querbalken 66 der Antenne 62 ist ein Fortsatz vorgesehen, durch welchen ein Anschlußkabel 68 aus der Antenne 62 austritt. Beim Anbringen der Antenne 62 wird das Anschlußkabel 68 durch die Aufnahmeöffnung 60 geführt, und der Fortsatz, der beispielsweise zylindrisch und konisch ausgeführt sein kann, wird in die Aufnahmeöffnung 60 eingesteckt, so daß die Antenne 62 auf diese Weise am Rahmen 12 zentriert ist. Die Antenne 62 ist am Rahmen 12 weiterhin mittels dreier Befestigungspunkte fixiert, nämlich im Bereich der Aussparungen 50 zwischen den Schnapplaschen 54 und den Federstegen 58 sowie durch am Mittelbalken 64 ausgebildete Nasen 70, die mit den Rastlaschen 46 zusammenwirken, indem sie von den keilförmigen Haken 48 hintergriffen werden und so eine Rastverbindung bilden. Auf diese Weise kann die Antenne 62 einfach aber sicher und stabil am Rahmen 12 montiert und befestigt werden. Der Rahmen 12 des Luftausströmers 10 ist vorzugsweise aus Kunststoff hergestellt, so daß das elektrische Feld der Antenne 62 nicht beeinträchtigt ist. Die T-Form der Antenne ist für die Anbringung am Rahmen 12 besonders vorteilhaft, da sie die Ausströmöffnung 26 nicht verringert.

Der Reflektor 16 ist in der dargestellten Ausführungsform als quaderförmiger Korb aus einem Metallgitter, etwa aus gestanztem Blech, mit einem Boden 72 und Seitenflächen 74 ausgeführt. Die Öffnung des Korbes ist zur Aufnahme des Rahmens 12 vorgesehen. An der Unterseite 24 der Grundplatte 18 sind Haltelaschen 76 zur Befestigung des Reflektors 16 vorgesehen (Figur 5), die sich senkrecht von der Unterseite 24 erstrecken. Die von der Durchströmöffnung 26 weg weisenden Vorderseite 78 der Haltelasche 76 schließt bündig mit dem äußeren Rand der Grundplatte 18 ab, während sich die Rückseite mittels eines Steges 79 gegen die Unterseite 24 der Grundplatte 18 abstützt. An der Vorderseite 78 jeder Haltelasche 76 ist ein keilförmiger Schnapphaken 80 ausgebildet.

Zur Montage des Reflektors 16 wird dieser mit den Seitenwänden 74 über die Haltelaschen 76 gestülpt, wobei die Seitenwänden 74 durch die Schnapphaken 80 elastisch nach außen gebogen werden, bis die Schnapphaken 80 in Öffnungen 82 in den Seitenwänden 74 einschnappen, so daß der Reflektor 16 sicher am Rahmen 12 befestigt ist. Das Anschlußkabel 68 kann einfach durch die Zwischenräume des Metallgitters nach außen geführt werden.

Der erfindungsgemäße Luftausströmer 10 kann beispielsweise in einem Blechausschnitt am Kofferraum eines Fahrzeugs angebracht sein, um durch die Rückschlagklappen 14 einen erhöhten Druck im Innenraum des Fahrzeuges auszugleichen. Der Luftausströmer 10 kann im Fahrzeug sehr einfach montiert werden, indem er mit der Anschlußwand 32 in den Blechausschnitt im Fahrzeug gesteckt wird. In der Anschlußwand 32 ausgebildete Befestigungslaschen 84 halten den Luftausströmer 10 im Blechausschnitt fest. Eine auf der Oberseite der Grundplatte umlaufende Dichtung 86 dichtet den Luftausströmer 10 ab. Damit ist die Antenne 62 vor mechanischer Beschädigung geschützt am Fahrzeug untergebracht und durch den Reflektor 16 gegen Störquellen im Fahrzeuginneren abgeschirmt.

## Patentansprüche

1. Luftausströmer (10), insbesondere zur Entlüftung des Innenraumes eines Fahrzeuges, mit einem Rahmen (12) und mindestens einer Rückschlagklappe (14), **dadurch gekennzeichnet, daß** am Rahmen eine Antenne (62) angebracht ist.

2. Luftausströmer nach Anspruch 1, **dadurch gekennzeichnet, daß** eine Rastverbindung vorgesehen sind, mittels der die Antenne (62) am Rahmen (12) angebracht ist.

3. Luftausströmer nach Anspruch 2, **dadurch gekennzeichnet, daß** die Rastverbindung aus zwei Rastlaschen (46) am Rahmen (12) und zwei Nasen (70) an der Antenne (62) besteht, die mit den Rastlaschen zusammenwirken

4. Luftausströmer nach einem der vorhergehenden Ansprüche, **dadurch gekennzeichnet, daß** am Rahmen (12) eine Aufnahmeöffnung (60) vorgesehen ist, in welche ein Fortsatz eingesteckt werden kann, der an der Antenne (62) ausgebildet ist.

5. Luftausströmer nach Anspruch 2, **dadurch gekennzeichnet, daß** am Rahmen (12) zwei Schnapplaschen (54) vorgesehen sind, die an den Enden der Antenne (62) angreifen können.

6. Luftausströmer nach Anspruch 5, **dadurch gekennzeichnet, daß** die Antenne (62) T-förmig ausgeführt ist und die Rastlaschen (46) am Mittelbalken (64) der Antenne angreifen und die Schnapplaschen (54) an den Enden des Querbalkens (66) der Antenne angreifen.

7. Luftausströmer, nach einem der vorhergehenden Ansprüche, **dadurch gekennzeichnet, daß** ein Reflektor (16) vorgesehen ist, der außerhalb des Rahmens (12) angebracht ist.

8. Luftausströmer, nach Anspruch 7, **dadurch gekennzeichnet, daß** der Reflektor (12) aus einem Metallgitter besteht.

9. Luftausströmer nach Anspruch 7 oder 8, **dadurch gekennzeichnet, daß** der Rahmen (12) mit mehreren Schnapphaken (80) versehen ist, die an dem Reflektor (16) angreifen.
